# EUROPEAN PATENT APPLICATION

(11) **EP 4 075 307 A1**
(43) Date of publication of application: **19.10.2022**
(21) Application number: 22164343.0
(22) Date of filing: 25.03.2022
(51) Int. Cl.: G06F 21/44, H04W 12/06, H04W 12/63, H04L 9/40

(54) **CONTROL DEVICE, NON-TRANSITORY COMPUTER READABLE STORAGE MEDIUM, AND SYSTEM**

(30) Priority: 16.04.2021 JP 2021069845
(71) Applicant: Kabushiki Kaisha Tokai Rika Denki Seisakusho, Aichi 480-0195 (JP)
(72) Inventor: OHASHI, Yosuke, Niwa-gun, 480-0195 (JP); HASEGAWA, Yosuke, Niwa-gun, 480-0195 (JP)
(74) Representative: TBK

(57) **Abstract**

There is provided a control device that is mounted on a housing, the control device comprising: a control section configured to control a control target device included in the housing based on a result of an authentication process that uses a wireless signal that is transmitted and received between a first wireless communication device mounted on the housing and portable equipment carried by a user, and that conforms to first wireless communication standards, and a result of a specified process that uses a wireless signal that is transmitted and received between a second wireless communication device mounted on the housing and the portable equipment, and that conforms to second wireless communication standards, wherein, when the authentication process is not finished within a specified time, the control section performs control to re-execute the authentication process without waiting for the specified process to be finished.

## Description

### CROSS REFERENCE TO RELATED APPLICATION(S)

This application is based upon and claims benefit of priority from Japanese Patent Application No. 2021-069845, filed on April 16, 2021, the entire contents of which are incorporated herein by reference.

### BACKGROUND

The present invention relates to a control device, a non-transitory computer readable storage medium, and a system.

In recent years, a technology that performs authentication according to a result of transmission and reception of signals between devices has been developed. For example, following JP 11-208419A discloses a system in which in-vehicle equipment authenticates a portable device by transmitting and receiving signals to and from the portable device.

### SUMMARY

It is also assumed that the above system adopts a configuration where an authentication mechanism is a multistage to improve security. However, in this case, a time required for retry is likely to increase.

Therefore, the present invention has been made in light of the above problem, and an object of the present invention is to achieve both of improvement of security and reduction of a time required for retry.

To solve the above-described problems, according to an aspect of the present invention, there is provided a control device that is mounted on a housing, the control device comprising: a control section configured to control a control target device included in the housing based on a result of an authentication process that uses a wireless signal that is transmitted and received between a first wireless communication device mounted on the housing and portable equipment carried by a user, and that conforms to first wireless communication standards, and a result of a specified process that uses a wireless signal that is transmitted and received between a second wireless communication device mounted on the housing and the portable equipment, and that conforms to second wireless communication standards, wherein, when the authentication process is not finished within a specified time, the control section performs control to re-execute the authentication process without waiting for the specified process to be finished.

In addition, to solve the above-described problems, according to another aspect of the present invention, there is provided a non-transitory computer readable storage medium having a program stored therein, the program causing: a computer to function as a control device that is mounted on a housing; the control device to realize a control function configured to control a control target device included in the housing based on a result of an authentication process that uses a wireless signal that is transmitted and received between a first wireless communication device mounted on the housing and portable equipment carried by a user, and that conforms to first wireless communication standards, and a result of a specified process that uses a wireless signal that is transmitted and received between a second wireless communication device mounted on the housing and the portable equipment, and that conforms to second wireless communication standards; and the control function to perform control to re-execute the authentication process without waiting for the specified process to be finished when the authentication process is not finished within a specified time.

In addition, to solve the above-described problems, according to another aspect of the present invention, there is provided A system comprising: a control device mounted on a housing; a first wireless communication device mounted on the housing; a second wireless communication device mounted on the housing; and portable equipment carried by a user, wherein the control device includes a control section configured to control a control target device included in the housing based on a result of an authentication process that uses a wireless signal that is transmitted and received between the first wireless communication device and the portable equipment, and that conforms to first wireless communication standards, and a result of a specified process that uses a wireless signal that is transmitted and received between the second wireless communication device and the portable equipment, and that conforms to the second wireless communication standards, and when the authentication process is not finished within a specified time, the control section performs control to re-execute the authentication process without waiting for the specified process to be finished.

As described above, according to the present invention, it is possible to achieve both of improvement of security and reduction of a time required for retry.

### BRIEF DESCRIPTION OF THE DRAWINGS

FIG. 1 is a block diagram illustrating a configuration example of a system 1 according to an embodiment of the present invention.
FIG. 2 is a sequence diagram illustrating an example of a flow of a process of a comparison system 8 according to the embodiment.
FIG. 3 is a sequence diagram illustrating a flow of a process of the system 1 according to the embodiment.
FIG. 4 is a flowchart illustrating an example of a flow of control of a control device 130 according to the embodiment.

### DETAILED DESCRIPTION OF THE EMBODIMENT

Hereinafter, referring to the appended drawings, preferred embodiments of the present invention will be described in detail. It should be noted that, in this specification and the appended drawings, structural elements that have substantially the same function and structure are denoted with the same reference numerals, and repeated explanation thereof is omitted.

### <1. Embodiment

### «1.1. System Configuration Example»

First, a configuration example of a system 1 according to the embodiment of the present invention will be described. The system 1 according to the present embodiment includes various devices that are mounted on a specified housing, and portable equipment that is carried by a user.

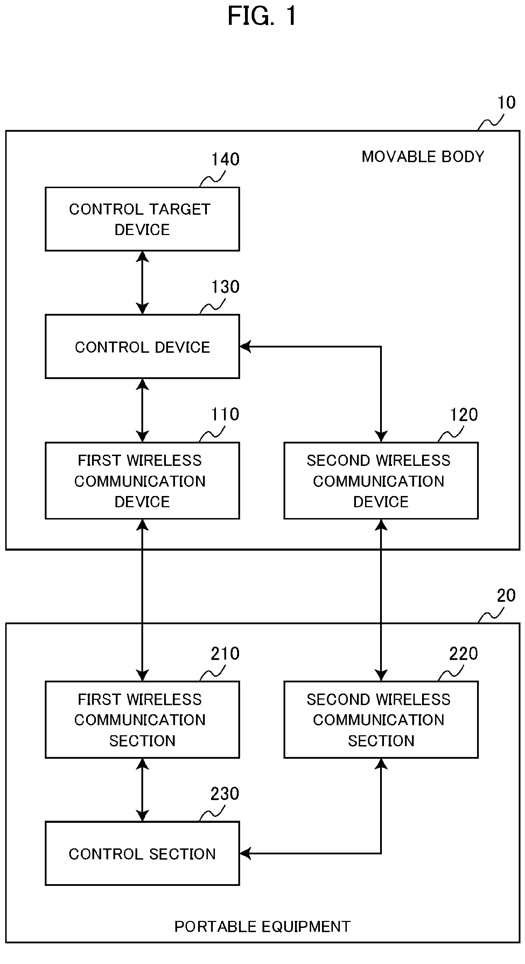

FIG. 1 is a block diagram illustrating the configuration example of the system 1 according to the embodiment of the present invention. In a case of the example illustrated in FIG. 1, the system 1 includes various devices that are mounted on a movable body 10, and portable equipment 20.

### (Movable Body 10)

The movable body 10 according to the present embodiment is an example of the housing on which each device described later is mounted. The example of the housing other than the movable body 10 is assumed as, for example, a door device that is installed indoor or outdoor.

The movable body 10 according to the present embodiment may be, for example, vehicles, ships, and airplanes that people can get on. A case where the movable body 10 according to the present embodiment is a general vehicle will be described below as a main example.

### (First Wireless Communication Device 110)

A first wireless communication device 110 according to the present embodiment transmits and receives wireless signals that conform to first wireless communication standards to and from the portable equipment 20 carried by a user who uses the movable body 10 (e.g., an owner of the movable body 10 or a person who is permitted by the owner to use the movable body 10).

For example, a signal of a Low Frequency (LF) range and a signal of an Ultra-High Frequency (UHF) range may be used for the above first wireless communication standards.

The first wireless communication device 110 includes an antenna element that transmits and receives wireless signals that conform to the above first wireless communication standards.

Furthermore, the first wireless communication device 110 according to the present embodiment executes an authentication process that uses the transmitted and received wireless signals.

In one example, the first wireless communication device 110 according to the present embodiment transmits an authentication request to the portable equipment 20 according to control of a control device 130, and receives an authentication response transmitted as a response to the authentication request by the portable equipment 20.

In this case, the above authentication request is a signal for requesting information that is necessary to authenticate authenticity of the portable equipment 20, and the above authentication request may be a signal that includes information that is necessary for the authentication.

Note that the above information that is necessary for authentication is, for example, an identifier of the portable equipment 20, a password determined in advance, key information, and a result of an arithmetic operation that uses a hash function.

Furthermore, the first wireless communication device 110 transmits an authentication process result to the control device 130.

### (Second Wireless Communication Device 120)

The second wireless communication device 120 according to the present embodiment transmits and receives wireless signals that conform to second wireless communication standards different from the first wireless communication standards to and from the portable equipment 20.

The example of the above second wireless communication standards is Ultra-Wide Band (UWB) wireless communication.

On the other hand, the second wireless communication standards according to the present embodiment are not limited to the above example, and may be various standards that are available to execute a specified process described later.

The second wireless communication device 120 includes an antenna element that transmits and receives wireless signals that conform to the above second wireless communication standards.

Furthermore, the second wireless communication devices 120 according to the present embodiment may execute the specified process that uses the transmitted and received wireless signals.

The above specified process is, for example, a process of estimating a positional relationship between the movable body 10 and the portable equipment 20 (more precisely, the positional relationship between the second wireless communication device 120 and the portable equipment 20).

The process of estimating the above positional relationship is, for example, a process (also referred to as distance measurement below) of estimating a distance between the movable body 10 and the portable equipment 20, and a process of estimating an angle of the portable equipment using the movable body 10 as a point of origin.

Furthermore, the second wireless communication device 120 transmits a specified process result to the control device 130.

### (Control Device 130)

The control device 130 according to the present embodiment includes a control section 135 that includes, for example, a processor.

The control section 135 according to the present embodiment controls transmission/reception of the first wireless communication device 110 for wireless signals that conform to the first wireless communication standards, and transmission/reception of the second wireless communication device 120 for wireless signals that conform to the second wireless communication standards.

Furthermore, the control section 135 according to the present embodiment controls a predetermined control target device 140 included in the movable body 10 based on the result of the authentication process that uses the wireless signal that conforms to the first wireless communication standards, and the result of the specified process that uses the wireless signal that conforms to the second wireless communication standards.

When the authenticity of the portable equipment 20 is verified by the authentication process, and the specified process result satisfies a specified condition, the control section 135 according to the present embodiment may cause the control target device 140 to execute a specified operation.

When, for example, the specified process is the above-described process of estimating the positional relationship, and when the authenticity of the portable equipment 20 is verified by the authentication process, and the movable body 10 and the portable equipment 20 have a specified positional relationship, the control section 135 may cause the control target device 140 to perform the specified operation.

Furthermore, when, for example, the specified process is the above-described process of estimating the distance, and when the authenticity of the portable equipment 20 is verified by the authentication process, and a distance between the movable body 10 and the portable equipment 20 is within a specified range, the control section 135 may cause the control target device 140 to perform the specified operation.

On the other hand, one of features of the control section 135 according to the present embodiment is that, when the authentication process is not finished within a specified time, the control section 135 performs control to re-execute the authentication process without waiting for the specified process to be finished.

According to the above control, it is possible to reduce the time required for retry while improving security by the authentication process and the specified process.

The control of the control device 130 according to the present embodiment will be separately described in detail.

### (Control Target Device 140)

The control target device 140 according to the present embodiment is a predetermined device included in the movable body 10, and executes the specified operation according to control of the control device 130.

The control target device 140 according to the present embodiment may include, for example, a locking device that controls unlocking and locking of a door of the movable body 10, and an engine.

When, for example, the authenticity of the portable equipment 20 is verified by the authentication process, and the specified process result satisfies the specified condition, the control device 130 may cause the locking device to execute unlocking, or may permit the engine to start.

### (Portable Equipment 20)

The portable equipment 20 according to the present embodiment is a device that is carried by the user who uses the movable body 10.

As illustrated in FIG. 1, the portable equipment 20 according to the present embodiment includes a first wireless communication section 210, a second wireless communication section 220, and a control section 230.

### (First Wireless Communication Section 210)

The first wireless communication section 210 according to the present embodiment transmits and receives wireless signals that conform to the first wireless communication standards to and from the first wireless communication device 110 mounted on the movable body 10.

Hence, the first wireless communication section 210 according to the present embodiment includes an antenna element that can transmit and receive wireless signals that conform to the first wireless communication standards.

### (Second Wireless Communication Section 220)

The second wireless communication section 220 according to the present embodiment transmits and receives wireless signals that conform to the second wireless communication standards to and from the second wireless communication device 120 mounted on the movable body 10.

Hence, the second wireless communication section 220 according to the present embodiment includes an antenna element that can transmit and receive wireless signals that conform to the second wireless communication standards.

### (Control Section 230)

The control section 230 according to the present embodiment controls operations of the first wireless communication section 210 and the second wireless communication section 220.

Functions of the control section 230 according to the present embodiment are realized by various processors.

The configuration example of the system 1 according to the present embodiment has been described above. Note that the above configuration described with reference to FIG. 1 is a mere example, and the configuration of the system 1 according to the present embodiment is not limited to this example.

For example, the plurality of second wireless communication devices 120 may be mounted on the movable body 10. In this case, the plurality of second wireless communication devices 120 may transmit and receive wireless signals to and from the respective pieces of portable equipment 20, and execute the specified process.

The configuration of the system 1 according to the present embodiment can be flexibly modified according to a specification and an operation.

### «1.2. Details of Control»

Next, the control of the control device 130 according to the present embodiment will be described in detail.

Hereinafter, an example of a flow of a process of a general comparison system 8 will be described first to describe an effect exhibited by the control device 130 according to the present embodiment.

Note that the comparison system 8 includes a movable body 80 and portable equipment 90. Furthermore, a first wireless communication device 810, a second wireless communication device 820, and a control device 830 are mounted on the movable body 80. Furthermore, the portable equipment 90 includes a first wireless communication section 910, a second wireless communication section 920, and a control section 930.

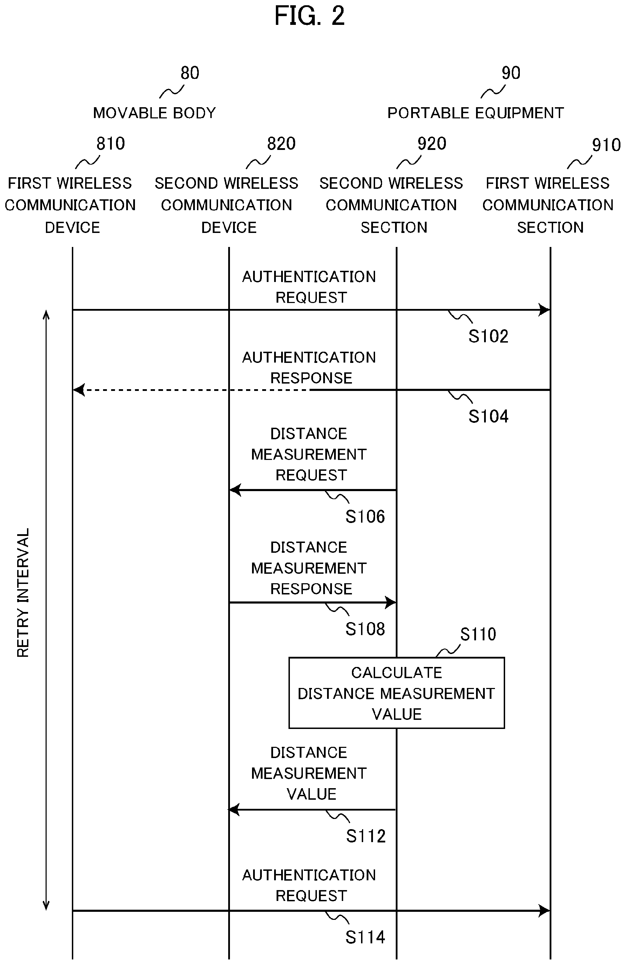

FIG. 2 is a sequence diagram illustrating an example of a flow of a process of the comparison system 8. Note that FIG. 2 exemplifies a case where distance measurement for estimating a distance between the movable body 80 and the portable equipment 90 is performed as the specified process.

In a case of the example illustrated in FIG. 2, the first wireless communication device 810 mounted on the movable body 80 first transmits an authentication request according to control of the control device 830 (S102).

Next, the first wireless communication section 910 of the portable equipment 90 transmits a distance measurement response as a response to the authentication request received in step S102 (S104).

However, even when the first wireless communication section 910 cannot receive the distance measurement response transmitted by the first wireless communication section 910 in step S102, or when the first wireless communication section 910 can receive the distance measurement response, a situation that information cannot be normally obtained due to an influence of, for example, noise is also likely to occur.

In this case, in the comparison system 8, after the distance measurement in steps S106 to S112 is finished, the authentication request is retransmitted (the authentication process is retried) (SI14). Furthermore, distance measurement is subsequently performed again.

As described above, in the comparison system 8, since the authentication process is retried after waiting for distance measurement to be finished, and the distance measurement accompanied by the retry of the authentication process is retried, a retry interval tends to become long.

Particularly when distance measurement is performed a plurality of times between the first wireless communication device 810 and the first wireless communication section 910, or when the plurality of first wireless communication devices 810 each perform distance measurement, the above tendency becomes more remarkable.

A technological idea of the present invention has been conceived focusing on the above point, and it is possible to effectively reduce the retry interval related to the authentication process.

Hence, when the authentication process is not finished within the specified time, the control section 135 of the control device 130 according to the present embodiment performs control to re-execute the authentication process without waiting for the specified process to be finished.

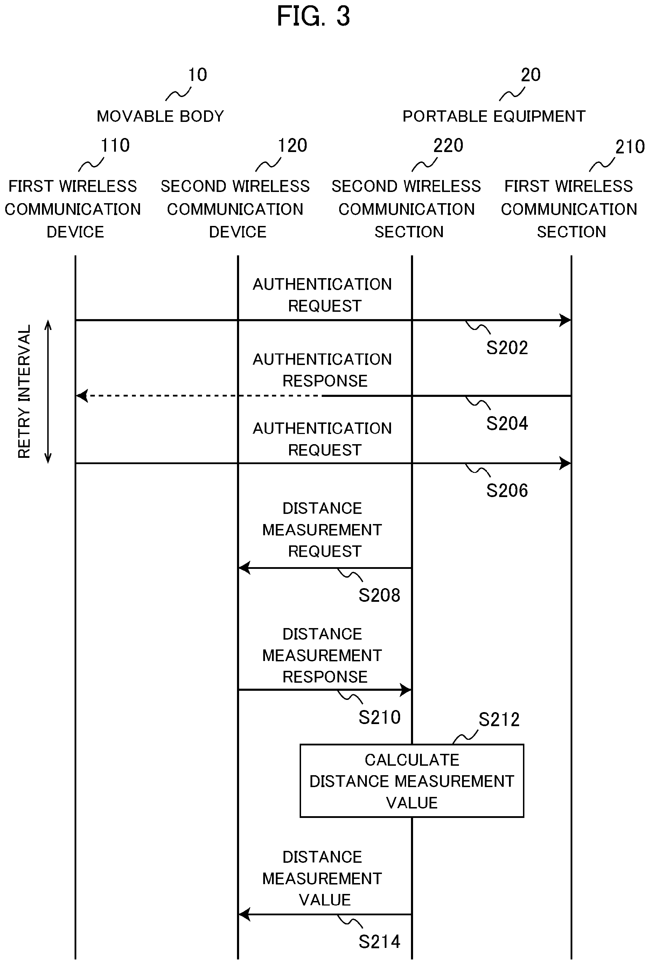

FIG. 3 is a sequence diagram illustrating the flow of the process of the system 1 according to the present embodiment.

In a case of an example illustrated in FIG. 3, the first wireless communication device 110 mounted on the movable body 10 first transmits an authentication request according to control of the control section 135 of the control device 130 (S202).

Next, the first wireless communication section 210 of the portable equipment 20 transmits a distance measurement response as a response to the authentication request received in step S202 (S204).

On the other hand, when the authentication process is not finished within the specified time after the control section 135 of the control device 130 causes the first wireless communication device 110 to transmit the authentication request in step S202, the control section 135 may cause the first wireless communication device 110 to retransmit the authentication request without waiting for the distance measurement (S208 to S214) that follows the transmitted authentication request to be finished.

Note that a condition for detecting that the authentication process is not finished within the specified time includes, for example, that the control section 135 cannot receive the authentication process result within the specified time, and that the first wireless communication device 110 cannot receive the distance measurement response within the specified time.

According to the above control, it is not necessary to wait for a time required for distance measurement in a cycle identical to that of the authentication process that is not finished within the specified time, so that it is possible to effectively reduce the retry interval related to the authentication process.

Note that, when causing the first wireless communication device 110 to retransmit the authentication request, the control section 135 may perform control to interrupt the distance measurement (S208 to S214) that follows the transmitted authentication request.

On the other hand, when receiving information related to a result of the distance measurement (S208 to S214) that follows the transmitted authentication request, the control section 135 may discard the information related to the result.

For example, the second wireless communication section 220 of the portable equipment 20 transmits a distance measurement request to the second wireless communication device 120 of the movable body 10 based on that the first wireless communication section 210 has received the authentication request in step S202 (S208).

The second wireless communication device 120 transmits a distance measurement response as a response to the distance measurement request received in step S208 (S210).

The second wireless communication section 220 calculates a distance measurement value based on the distance measurement request transmitted in step S208, and the distance measurement response received in step S210.

The second wireless communication section 220 calculates the distance measurement value based on a time ΔT1 from a time at which the second wireless communication section 220 has transmitted the distance measurement request to a time at which the second wireless communication section 220 has received the distance measurement response, and a time ΔT2 from a time at which the second wireless communication device 120 has received the distance measurement request to a time at which the second wireless communication device 120 has transmitted the distance measurement response.

More specifically, the second wireless communication section 220 calculates a time that is taken for round-trip communication of the distance measurement request and the distance measurement response by subtracting the time ΔT2 from the time ΔT1, and calculates a time that is taken for single-trip communication of the distance measurement request or the distance measurement response by dividing the time by 2. Furthermore, by multiplying a value of (time ΔT1 - ΔT2) with a speed of a signal, the second wireless communication section 220 calculates the distance measurement value that is an estimated value of a distance between the movable body 10 and the portable equipment 20.

Furthermore, the second wireless communication section 220 transmits the distance measurement value calculated in step S202 to the second wireless communication device 120 (S214).

In this regard, as described above, the control section 135 has already performed retry control of the authentication process, and therefore may discard a distance measurement result (the distance measurement value itself or a result of decision based on the distance measurement value) of the distance measurement value received by the second wireless communication device 120 in step S214.

Note that FIG. 2 exemplifies the case where the distance measurement value is calculated by the second wireless communication section 220. However, the distance measurement value may be calculated by the second wireless communication device 120.

Furthermore, transmission/reception of the distance measurement request and the distance measurement response and calculation of the distance measurement value may be executed a plurality of times.

The flow of the process of the system 1 according to the present embodiment has been described above citing the example.

Next, the flow of the control of the control device 130 according to the present embodiment will be described in detail one more time.

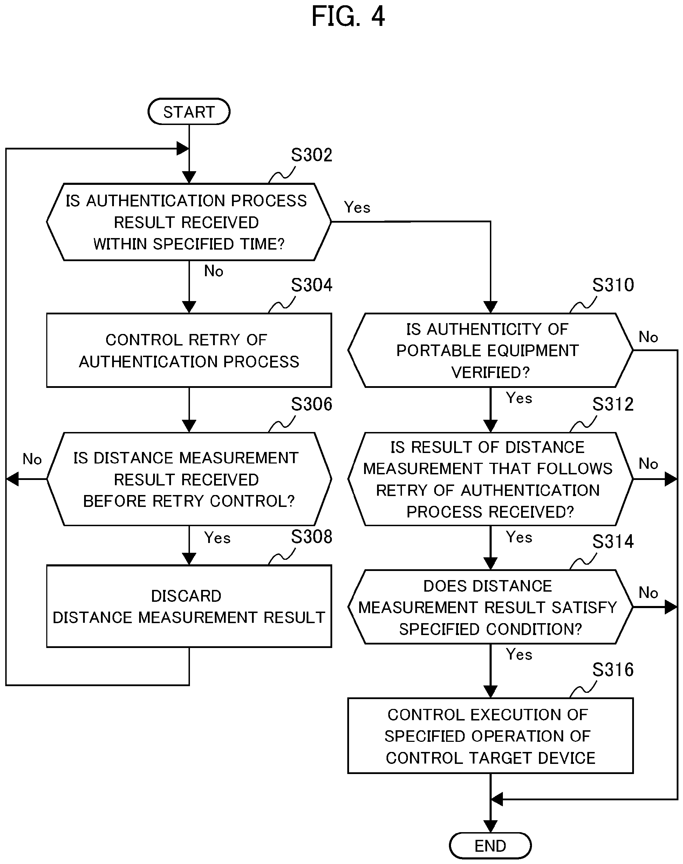

FIG. 4 is a flowchart illustrating an example of the flow of the control of the control device 130 according to the present embodiment.

In a case of the example illustrated in FIG. 4, the control section 135 first decides whether or not the control section 135 could have received the authentication process result within the specified time after causing the first wireless communication device 110 to transmit the authentication request (S302).

In this regard, in a case where the control section 135 cannot receive the authentication process result within the specified time (S302: No), the control section 135 controls retry of the authentication process (S304).

More specifically, the control section 135 causes the first wireless communication device 110 to retransmit the authentication request.

Next, the control section 135 decides whether or not the control section 135 has received a result of distance measurement (all distance measurement except distance measurement that follows the authentication request that the control section 135 causes the first wireless communication device 110 to retransmit in step S304) before the retry control in step S304 (S306).

In this regard, in a case where the control section 135 has received a corresponding distance measurement result (S306: Yes), the control section 135 discards the distance measurement result (S308).

On the other hand, in a case where the control section 135 has received the authentication process result within the specified time in step S302 (S302: Yes), the control section 135 decides whether or not authenticity of portable equipment is verified based on the authentication process result (S310).

In this regard, in a case where the authenticity of the portable equipment is not verified (S310: No), the control device 130 may finish a series of processes.

On the other hand, in a case where the authenticity of the portable equipment is verified (S310: Yes), the control section 135 decides whether or not the control section 135 has received a result of distance measurement that follows retry of the authentication process (S312).

In this regard, in a case where the result of the distance measurement that follows the retry of the authentication process cannot be received within a predetermine time (S312: No), the control device 130 may finish the series of processes.

On the other hand, in a case where the result of the distance measurement that follows the retry of the authentication process can be received within the predetermined time (S312: Yes), the control section 135 decides whether or not the distance measurement result satisfies the specified condition (S314).

In this case, when, for example, the received distance measurement result is the distance measurement value, the control section 135 may decide whether or not the distance measurement value is within the specified range.

Furthermore, when, for example, the received distance measurement result is information that indicates whether or not the distance measurement value is within the specified range, the control section 135 may make decision based on the information.

When the distance measurement result satisfies the specified condition (S314: Yes), the control section 135 controls execution of the specified operation of the control target device 140 (S316).

### <2. Supplementary Explanation>

Heretofore, preferred embodiments of the present invention have been described in detail with reference to the appended drawings, but the present invention is not limited thereto. It should be understood by those skilled in the art that various changes and alterations may be made without departing from the spirit and scope of the appended claims.

Furthermore, a series of processes of each device described in this description may be realized by programs stored in a non-transitory computer readable storage medium. Each program is read on an RAM when, for example, executed by a computer, and is executed by a processor such as a CPU. The above storage medium is, for example, a magnetic disk, an optical disk, a magneto-optical disk, or a flash memory. Furthermore, the above programs may be distributed via, for example, a network without using the storage medium.

There is provided a control device that is mounted on a housing, the control device comprising: a control section configured to control a control target device included in the housing based on a result of an authentication process that uses a wireless signal that is transmitted and received between a first wireless communication device mounted on the housing and portable equipment carried by a user, and that conforms to first wireless communication standards, and a result of a specified process that uses a wireless signal that is transmitted and received between a second wireless communication device mounted on the housing and the portable equipment, and that conforms to second wireless communication standards, wherein, when the authentication process is not finished within a specified time, the control section performs control to re-execute the authentication process without waiting for the specified process to be finished.

## Claims

1. A control device that is mounted on a housing, the control device comprising:
a control section configured to control a control target device included in the housing based on a result of an authentication process that uses a wireless signal that is transmitted and received between a first wireless communication device mounted on the housing and portable equipment carried by a user, and that conforms to first wireless communication standards, and a result of a specified process that uses a wireless signal that is transmitted and received between a second wireless communication device mounted on the housing and the portable equipment, and that conforms to second wireless communication standards,
wherein, when the authentication process is not finished within a specified time, the control section performs control to re-execute the authentication process without waiting for the specified process to be finished.

2. The control device according to claim 1,
wherein, when the authentication process is not finished within the specified time, and when the control section receives information related to the result of the specified process, the control section discards the information related to the result.

3. The control device according to claim 1,
wherein, when the authentication process is not finished within the specified time, the control section causes the first wireless communication device to execute retransmission of an authentication request to the portable equipment.

4. The control device according to claim 1,
wherein, when authenticity of the portable equipment is verified by the authentication process, and the result of the specified process satisfies a specified condition, the control section causes the control target device to execute a specified operation.

5. The control device according to claim 1,
wherein the specified process includes a process of estimating a positional relationship between the housing and the portable equipment.

6. The control device according to claim 5,
wherein the process of estimating the positional relationship includes a process of estimating a distance between the housing and the portable equipment.

7. The control device according to claim 1,
wherein the second wireless communication standards include ultra-wide band wireless communication.

8. The control device according to claim 1,
wherein the housing includes a movable body.

9. The control device according to claim 8,
wherein the control target device includes at least one of a locking device and an engine.

10. A non-transitory computer readable storage medium having a program stored therein, the program causing:
a computer to function as a control device that is mounted on a housing;
the control device to realize a control function configured to control a control target device included in the housing based on a result of an authentication process that uses a wireless signal that is transmitted and received between a first wireless communication device mounted on the housing and portable equipment carried by a user, and that conforms to first wireless communication standards, and a result of a specified process that uses a wireless signal that is transmitted and received between a second wireless communication device mounted on the housing and the portable equipment, and that conforms to second wireless communication standards; and
the control function to perform control to re-execute the authentication process without waiting for the specified process to be finished when the authentication process is not finished within a specified time.

11. A system comprising:
a control device mounted on a housing;
a first wireless communication device mounted on the housing;
a second wireless communication device mounted on the housing; and
portable equipment carried by a user, wherein
the control device includes a control section configured to control a control target device included in the housing based on a result of an authentication process that uses a wireless signal that is transmitted and received between the first wireless communication device and the portable equipment, and that conforms to first wireless communication standards, and a result of a specified process that uses a wireless signal that is transmitted and received between the second wireless communication device and the portable equipment, and that conforms to the second wireless communication standards, and
when the authentication process is not finished within a specified time, the control section performs control to re-execute the authentication process without waiting for the specified process to be finished.
